## Europäisches Patentamt

## European Patent Office

## Office européen des brevets

(19)

(11) Veröffentlichungsnummer: **0 250 798**
**B1**

(12)

# EUROPÄISCHE PATENTSCHRIFT

(45) Veröffentlichungstag der Patentschrift:
**12.09.90**

(21) Anmeldenummer: **87106883.9**

(22) Anmeldetag: **12.05.87**

(51) Int. Cl.⁵: **B29C 49/46**, B29C 59/10

(54) **Verfahren und Vorrichtung zur Erzeugung von Adhäsionskräften an den Oberflächen von aus Kunststoff hergestellten Hohlkörpern.**

(30) Priorität: **21.06.86 DE 3620877**

(43) Veröffentlichungstag der Anmeldung:
**07.01.88 Patentblatt 88/1**

(45) Bekanntmachung des Hinweises auf die Patenterteilung:
**12.09.90 Patentblatt 90/37**

(84) Benannte Vertragsstaaten:
**AT BE DE ES FR GB IT SE**

(56) Entgegenhaltungen:
**DE-A- 3 027 531**
**DE-A- 3 210 677**
**DE-A- 3 513 144**
**DE-C- 3 523 137**

(73) Patentinhaber: **Kalwar, Klaus, Alte Landwehr 10,
D-4803 Steinhagen(DE)**

(72) Erfinder: **Kalwar, Klaus, Alte Landwehr 10,
D-4803 Steinhagen(DE)**

(74) Vertreter: **Stracke, Alexander, Dipl.-Ing. et al,
Jöllenbecker Strasse 164, D-4800 Bielefeld 1(DE)**

ACTORUM AG

## Beschreibung

Die vorliegende Erfindung betrifft ein Verfahren entsprechend dem Gattungsbegriff des Patentanspruches 1 sowie eine Vorrichtung zur Durchführung des Verfahrens.

Um zu verhindern, daß Teile von in Hohlkörpern lagernden Medien durch die Hohlkörperwandung diffundieren, was sowohl zu Umweltbelastungen führen als auch die Verhältnisse und Eigenschaften der Medien verändern kann, werden die Hohlkörper mit Beschichtungen versehen, die eine Sperre darstellen und in Form von beispielsweise Lack aufgetragen werden.

Zweckmäßig ist es hierbei, die Beschichtung auf der inneren Oberfläche des Hohlkörpers vorzusehen, da dadurch auch ein Eindringen von Medienpartikeln in die Wandung verhindert wird, was ebenfalls zu einer Veränderung der Verhältnisse des Mediums führen würde.

Bei Hohlkörpern aus unpolaren Kunststoffen ergibt sich jedoch das Problem, daß eine für die Haftung des Beschichtung erforderliche Adhäsionskraft nicht vorhanden ist. Diese wird beispielsweise durch eine Koronaentladung, bei der eine innere, in dem Hohlkörper angeordnete und eine äußere im Bereich der äußeren Oberfläche angeordnete Elektrode zusammenwirken, erzeugt.

Insbesondere bei komplizierten Raumformen des Hohlkörpers ergeben sich jedoch hinsichtlich der Gestaltung der inneren Elektrode Probleme, da zur Erzeugung von gleichmäßigen Adhäsionskräften die Elektroden an jedem Punkt einen gleichmäßigen Abstand zur zugeordneten Oberfläche aufweisen müssen.

Aus der DE-B-12 84 620 ist bekannt, daß die innere Elektrode aus einer auf einem Träger angeordneten Hülle gebildet wird, die mit Gas oder Flüssigkeit füllbar ist und sich mit ihrer Außenfläche an der inneren Oberfläche des Hohlkörpers anlegen soll. In der Praxis hat sich jedoch gezeigt, daß dieses Verfahren recht umständlich, zeitaufwendig und teuer ist. Eine gleichmäßige Behandlung der Hohlkörperinnenwand erfordert auch einen gleichmäßigen Elektrodenspalt zwischen der mit einem flüssigen oder gasförmigen Medium gefüllten Hülle und der inneren Oberfläche des Hohlkörpers. Dies läßt sich jedoch in der Praxis, insbesondere bei komplizierten Hohlkörperformen nicht in ausreichendem Maß verwirklichen, so daß die Forderung, durch eine an jeder Stelle gleiche Koronaentladung gleichmäßige Adhäsionskräfte zu erreichen, nicht in wünschenswertem Maße erfüllt wird. Überdies ist auf diese Art und Weise eine Koronabehandlung von vollständig geschlossenen Hohlkörpern, deren Außenfläche lackiert werden soll, gar nicht möglich.

Der vorliegenden Erfindung liegt daher die Aufgabe zugrunde, ein Verfahren der gattungsgemäßen Art so zu gestalten, daß eine einfache und rationelle und dadurch kostengünstige sowie im gesamten Oberflächenbereich gleichmäßige Koronaentladung auch bei geschlossenen Hohlkörpern möglich ist.

Diese Aufgabe wird erfindungsgemäß durch die in dem Kennzeichen des Patentanspruches 1 aufgeführten Merkmale gelöst.

Es ist nunmehr möglich, in einem Arbeitsgang den Hohlkörper herzustellen und seine Oberfläche einer Koronaentladung zu unterziehen. So kann das Gas oder Gasgemisch als Blasmedium eingesetzt werden und die Funktion von Blasluft übernehmen mit der im Zusammenspiel mit dem Blasformwerkzeug eine Formgebung des Hohlkörpers erfolgt. Auch vollständig geschlossene Hohlkörper können an ihrer äußeren Oberfläche einer Koronaentladung unterzogen werden, wenn nach der Formgebung des Hohlkörpers das ionisierbare Gas bei Zuführung von elektrischer Energie durch Anlegen einer Energiequelle an die Wandung des Hohlkörpers elektrisch leitfähig wird. Auf diese Art ist es möglich, die gesamte Außenfläche des Hohlkörpers gleichmäßig einer Koronabehandlung zu unterziehen, so daß auch die entstehenden Adhäsionskräfte gleichmäßig wirken, was beispielsweise bei nachträglichen Lackreparaturarbeiten von erheblichem Vorteil ist.

Weiter besteht die Möglichkeit, bei offenen Hohlkörpern das eingebrachte Gas oder Gasgemisch nach erfolgter Koronabehandlung abzusaugen und zu reinigen und somit für eine neuere Verwendung bereitzustellen.

Als ionisierbare Gase können Edelgase wie beispielsweise Argon, Neon, Helium oder Gemische von Gasen bzw. Gemische mit Luftanteilen eingesetzt werden. Aufgrund seiner guten Wärmeleitfähigkeit bietet die Verwendung von Helium eine ausgezeichnete Möglichkeit der Kühlung des Hohlkörpers während des Blasvorganges.

Neben der beschriebenen Möglichkeit, ein Gas oder Gasgemisch zur Fertigung des Hohlkörpers einzusetzen, besteht auch die Möglichkeit, die Fertigung zunächst wie bekannt mit Luft durchzuführen, diese nach einer Formgebung des Hohlkörpers aus dem Blasformwerkzeug abzusaugen und den Hohlkörper anschließend zum Zwecke der Koronabehandlung mit dem Gas oder Gasgemisch zu beaufschlagen.

Neben dem Einsatz von Edelgasen oder Mischungen aus ihnen können auch minderwertigere Gase eingesetzt werden, wenn sie mit entsprechenden Mitteln, beispielsweise mit Kalium oder ähnlichem geimpft sind, daß die gewünschte Ionisierbarkeit gegeben ist. Zur Begünstigung der Stoßionisation kann ein radioaktives Material Verwendung finden.

Eine Vorrichtung zur Durchführung des erfindungsgemäßen Verfahrens, die eine im Innern des Hohlkörpers oder dessen Öffnungsbereich angeordnete innere Elektrode und eine im Bereich der äußeren Oberfläche des Hohlkörpers angeordnete äußere Elektrode aufweist, ist so gestaltet, daß die äußere Elektrode durch das den Hohlkörper zumindest teilweise umgreifende Werkzeug gebildet wird, wobei diesem ein Hochspannung erzeugender Generator zugeordnet ist.

Eine besonders gleichmäßige Koronabehandlung der äußeren Oberfläche des Hohlkörpers wird dadurch erreicht, daß das geteilte Blasformwerkzeug nach dem Blasvorgang soweit geöffnet wird, daß zwischen dem Hohlkörper und der Formfläche des Blasformwerkzeuges ein gleichmäßiger geringer Spalt entsteht. Vorzugsweise beträgt die Spaltbreite ca. 0,2 bis 0,8 mm. Die Formfläche des Blasformwerkzeuges ist mit einer dielektrischen Schicht, wie Keramik z.B. aus Aluminiumoxyd, versehen.

Weitere vorteilhafte Ausgestaltungen der Erfindung sind in den Unteransprüchen gekennzeichnet.

Ausführungsbeispiele der Erfindung werden nachfolgend anhand beigefügter Zeichnungen beschrieben.

Es zeigen:

Fig. 1 bis 3 Ausführungsbeispiele von Vorrichtungen zur Durchführung der erfindungsgemäßen Verfahren in schematischer Darstellung,
Fig. 4 ein weiteres Ausführungsbeispiel einer Vorrichtung in einer schematisierten Draufsicht,
Fig. 5 ein weiteres Ausführungsbeispiel einer erfindungsgemäßen Vorrichtung ebenfalls schematisch dargestellt.

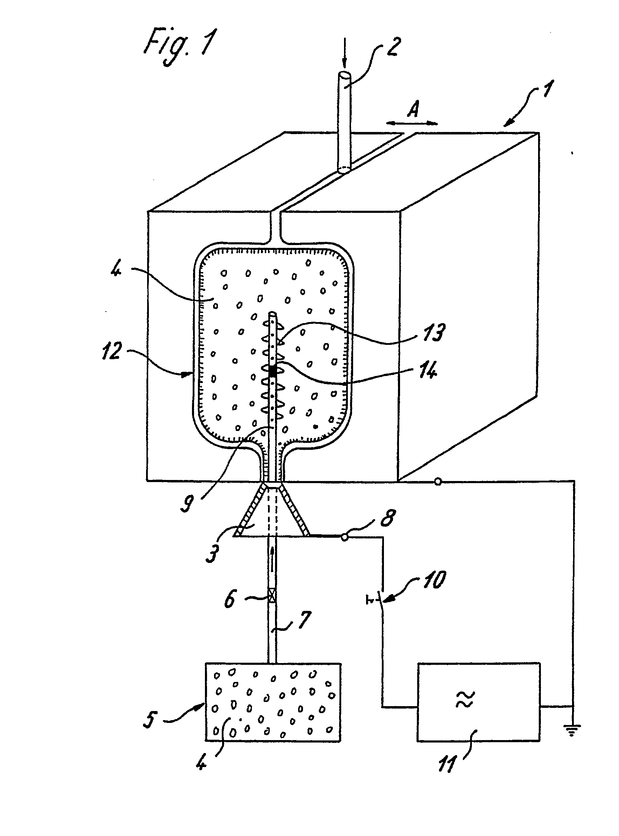

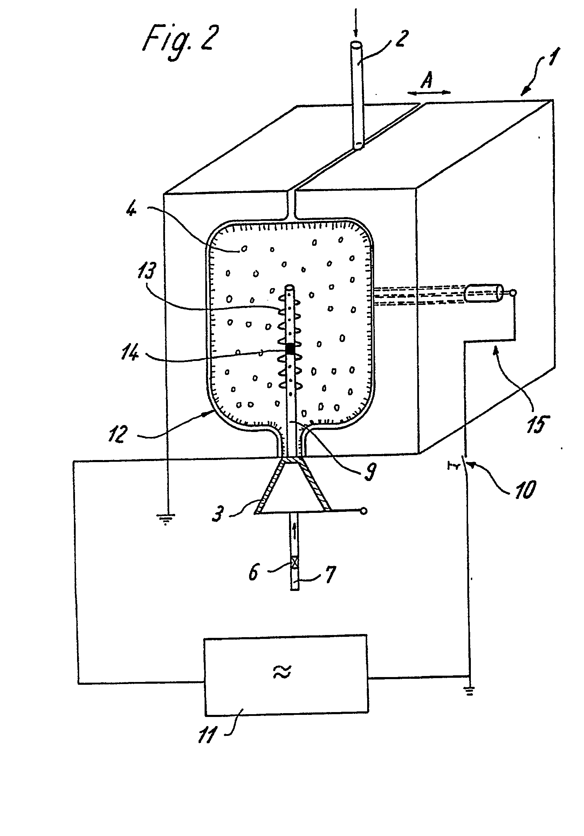

Ein in den Figuren 1 und 2 dargestelltes Blasformwerkzeug 1 ist zweiteilig ausgebildet, wobei sich das Blasformwerkzeug durch Bewegen der beiden Hälften in Richtung des Pfeiles A öffnen bzw. schließen läßt.

Über eine Materialdüse 2, die mit einem nichtdargestellten Blasformextruder verbunden ist, wird ein plastifizierter Kunststoffschlauch in Richtung des Pfeiles in das geöffnete Blasformwerkzeug 1 in einer vorbestimmten Länge eingeführt. Der Kunststoffschlauch kann dabei beispielsweise aus Polyäthylen bestehen.

Nach Einführung des Kunststoffschlauches wird das Werkzeug 1 geschlossen und schneidet das Schlauchende so ab, daß ein geschlossener Boden entsteht.

Auf der der Materialdüse 2 gegenüberliegenden Seite weist das Blasformwerkzeug 1 eine Blasdüse 3 auf, durch die ein gasförmiges Medium, beispielsweise Luft oder entsprechend dem Erfindungsgedanken ein ionisierbares Gas oder Gasgemisch 4 so unter Druck in den Kunststoffschlauch eingeführt wird, daß dieser sich mit seiner Wandung an der Formfläche des Blasformwerkzeuges 1 anlegt.

Das Gas 4 wird einem Behälter 5 entnommen und über ein mit einem Ventil 6 versehenes Rohr 7 dem Kunststoffschlauch zugeführt. Dabei ist die Blasdüse 3 so gestaltet und isoliert, daß über einen elektrischen Anschluß 8 und über ein durch die Blasdüse 3 geführtes und in den nach dem Blasen entstandenen Hohlkörper ragendes Leitrohr 9 eine vorzugsweise hochfrequente Hochspannung dem Innenraum des Hohlkörpers zugeführt wird.

Ein mit dem elektrischen Anschluß 8 über einen Schalter 10 verbundener Generat or 11 erzeugt die hochfrequente Hochspannung, bei deren Einwirken auf das ionisierbare Gas oder Gasgemisch eine Stoßionisation des Gases erfolgt, so daß das Gas elektrisch leitfähig wird. Die Kunststoffwandung des Hohlkörpers bildet dabei ein Dielektrikum und ermöglicht gegenüber dem an Masse angeschlossenen Blasformwerkzeugs 1 die Entwicklung einer Koronaentladung an der inneren Oberfläche des Hohlkörpers 12.

Um diese Koronaentladung zu begünstigen sind an dem Leitrohr 9 Entladungsspitzen 13 vorgesehen, die über die Mantelfläche des Leitrohres 9 verteilt sind. Zur Begünstigung der Ionisierung des Gases oder des Gasgemisches und damit auch zur Begünstigung der Koronaentladung kann am Leitrohr 9 ein geeignetes radioaktives Material 14 vorgesehen, sein.

Neben der in den Figuren dargestellten Möglichkeit, das Leitrohr 9 mit Entladungsspitzen 13 zu versehen, besteht eine weitere Möglichkeit zur gleichmäßigen Zündung darin, in einen doppelwandigen Isolierrohr, beispielsweise aus Keramik, das im Innern mit einem ionisierbarem Edelgas gefüllt ist, auf das dann allerdings ohne Entladungsspitzen ausgebildete Leitrohr 9 aufzusetzen.

Gegenüber dem in der Figur 1 dargestellten Ausführungsbeispiel ist in der Figur 2 eine Vorrichtung gezeigt, bei der die Hochspannungszuleitung 15 nicht durch die Blasdüse 3 sondern direkt durch eine Seitenwand des Blasformwerkzeuges 1 geführt ist. Diese Möglichkeit der Hochspannungszuführung kann beispielsweise aus konstruktiven Gründen erforderlich sein.

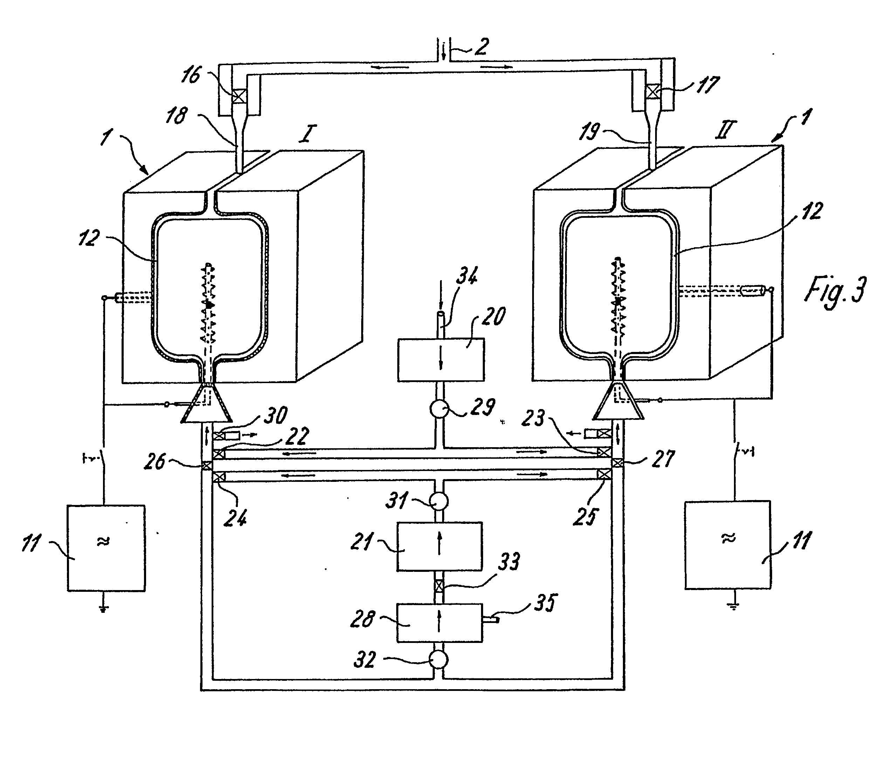

Eine besonders vorteilhafte Ausgestaltung einer erfindungsgemäßen Vorrichtung ist in der Figur 3 dargestellt. Prinzipiell ist ihr Aufbau entsprechend dem der in den Figuren 1 und 2 dargestellten Ausführungsbeispiele. Allerdings arbeiten hier zwei Blasformwerkzeuge 1 taktweise nebeneinander, wobei hinsichtlich kurzer Fertigungszeiten ein besonders rationelles Arbeiten ermöglicht wird und ein besonders effektvoller Einsatz des relativ teuren ionisierbaren Gases oder Gasgemisches erfolgen kann.

Der über die Materialdüse 2 hinzugeführte Kunststoffschlauch wird abwechselnd den Spritzeinheiten I und II zugeführt, deren Bestandteil jeweils ein Materialventil 16 bzw. 17 ist. Den Materialventilen 16 bzw. 17 ist jeweils eine Materialdüse 18 bzw. 19 nachgeordnet, durch die der Kunststoffschlauch in die Blasformwerkzeuge eingeführt wird.

Den Spritzeinheiten I und II sind gemeinsam ein Luftspeicher 20 und ein Gasspeicher 21, die jeweils über mit Ventilen 22, 24,26 bzw. 23,25,27 versehenen Zuleitungen mit den Blasform werkzeugen 1 gekoppelt sind.

Ebenfalls an jedem Blasformwerkzeug 1 ist ein Generator 11 angeschlossen.

Im folgenden sei der Funktionsablauf der dargestellten Vorrichtung beschrieben:

Über das geöffnete Materialventil 16 der Spritzeinheit I sowie über die dazu gehörige Materialdüse 18 wird der Kunststoffschlauch dem Blasformwerkzeug 1 zugeführt. Dabei sind die Ventile 22,24 und 26 geschlossen.

Nach der vorbestimmten Zuführung des Kunststoffschlauches und dem Schließen des Blasformwerkzeuges 1 wird das Ventil 22 geöffnet und über eine Pumpe 29 aus dem Luftspeicher 20 entnommene Luft in das Innere des Kunststoffschlauches gepreßt, so daß sich dieser an den Formflächen des Blasformwerkzeuges 1 anlegt.

Während nun der entstandene Hohlkörper bis zur Formstabilität in dem Blasformwerkzeug 1 verbleibt und dort abkühlt wird der beschriebene Arbeitsvorgang nun in der Spritzeinrichtung 2 durchgeführt.

Nachdem der in der Spritzeinrichtung I einliegende Hohlkörper bis zur Formstabilität abgekühlt ist, kann die in dem Hohlkörper verbliebene Luft mittels der Pumpe 29 abgesaugt oder über ein zu öffnendes Ventil 30 druckentlastend abströmen.

In der Zwischenzeit wird der Hohlkörper der Spritzeinrichtung II mittels der Pumpe 29 und das geöffnete Ventil 23 ebenfalls mit Luft gefüllt.

Ein dem Gasspeicher 21 entnommenes Gas oder Gasgemisch wird nun während Luft in den in der Spritzeinrichtung II befindlichen Kunststoffschlauch gedrückt wird, mit Hilfe der Pumpe 31 in den in der Spritzeinrichtung 1 befindlichen Hohlkörper gepreßt. Selbstverständlich sind dabei die Ventile 24 und 26 geöffnet, während die Ventile 22 und 30 geschlossen sind. Nachdem der Hohlkörper der Spritzeinrichtung I mit Gas gefüllt ist, kann durch Einschalten des Generators 11 die Koronaentladung erfolgen.

Nach der Koronabehandlung wird bei geöffnetem Ventil 26 und geschlossenen Ventilen 22,24 und 30 durch eine weitere Pumpe 32 das Gas aus dem Innenraum des Hohlkörpers der Spritzeinrichtung I abgessaugt und in eine Reinigungseinrichtung 28, die zwischen der Pumpe 32 und dem Gasspeicher 21 angeordnet ist, gefördert. In dieser Reinigungseinrichtung 28 wird das Gas von Luft oder anderen Verschmutzungsteilen gereinigt und anschließend bei geöffnetem Ventil 33 dem Gasspeicher 21 zur Wiederverwendung zugeführt.

Mittels einer Zuleitung 34 wird dem Luftspeicher 20 Luft und mittels einer weiteren Zuleitung 35 wird der Reinigungseinrichtung 28 bzw. dem Gasspeicher 21 bei Bedarf Gas zugeführt.

Der zuvor beschriebene Arbeitsablauf für die Spritzeinheit I gilt selbstverständlich auch für die Spritzeinheit II.

Mit Hilfe des erfindungsgemäßen Verfahrens ist es auch möglich, die äußere Oberfläche eines Kunststoffhohlkörpers einer Koronabehandlung zu unterziehen. Eine für diesen Zweck geeignete Vorrichtung ist in der Figur 4 dargestellt. Das zweigeteilte Blasformwerkzeug 1 wird, nachdem der Hohlkörper 12 hergestellt ist und seine innere Oberfläche einer Koronabehandlung unterzogen wurde, soweit geöffnet, daß zwischen der äußeren Oberfläche des Hohlkörpers 12 und der zugeordneten Formflächen des Blasformwerkzeuges 1 ein Spalt 36 entsteht, der vorzugsweise 0,2 bis 0,5 mm breit ist.

Anschließend wird wie zuvor schon beschrieben durch Einschaltung des Generators 11 eine hochfrequente Hochspannung auf das Blasformwerkzeug 1 übertragen, so das es gleichzeitig zu einer Koronaentladung im Innenraum des Hohlkörpers 12 und in dem Spalt 36 kommt, wobei die letztere Entladung zur Koronabehandlung des Hohlkörpers 12 auf seiner äußeren Oberfläche führt.

Um zu verhindern, daß es zu partiell unterschiedlich intensiven Stromflüssen kommt, die je nach Formgebung aus unterschiedlichen Konturen und Wandstärken des Hohlkörpers resultieren und die das thermisch belastete Hohlkörpermaterial schädigen können, ist die Formfläche des Blasformwerkzeuges 1 mit einem Dielektrikum versehen, das beispielsweise aus einer Keramik-Schicht 37 wie Aluminiumoxyd besteht. Durch diese Maßnahme wird eine elektrische Lastverteilung erreicht.

Da durch die Stellung der beiden Teile des Blasformwerkzeugs 1 zueinander im geöffneten Zustand Zwischenräume 38 entstehen, die die äußere Oberfläche des Hohlkörpers 12 nicht abdecken und somit dort auch keine Koronabehandlung ermöglichen, sind federbelastete Massebleche 39 vorgesehen, die in den Blasformwerkzeugteilen festgelegt sind und die Zwischenräume 38 derart überbrücken, daß auch in diesen Bereichen eine Koronaentladung möglich wird. Die Massebleche 39 sind vorzugsweise ebenfalls mit einer Keramik-Schicht versehen.

Sollte die Forderung bestehen, den Spalt 36 toleranzgenau zur Kontur des Hohlkörpers 12 zu gestalten, ist es auch denkbar, das Blasformwerkzeug in einzelne zusammenfügbare Segmente zu teilen. Aus fertigungstechnischen Gründen kann es auch erforderlich sein, Hohlkörper nicht direkt in einem Blasformwerkzeug einer Behandlung zur Erhöhung der Adhäsionskräfte zu unterziehen, sondern in einem separaten Werkzeug. Dies ist dann zweckmäßig, wenn ein Betreiber mehrerer Blasformanlagen nicht jede dieser Anlagen mit einer Vorrichtung zur Erhöhung der Adhäsionskräfte versehen will.

Für diesen Fall kann beispielsweise ein Werkzeug 40, wie es in der Figur 5 dargestellt ist, eingesetzt werden. Eine Aufnahme 42, in die der Hohlkörper eingelegt wird, entspricht weitgehend seinen äußeren Konturen. Um insbesondere eine äußere flächendeckende Koronabehandlung des Hohlkörpers zu begünstigen , ist die Mantelfläche der Aufnahme 42 mit Profilierungen 41 versehen, die als in das Innere der Aufnahme ragende Stege ausgebildet sind, die abwechselnd auf den Umfang verteilt in konvexer oder konkaver Wölbung zur Querschnittsebene verlaufen.

Da auch das Werkzeug 40 zweiteilig ausgebildet ist, wobei in der Figur 5 lediglich ein Teil dargestellt ist, ergibt sich beim Öffnen des Werkzeuges 40, daß sich jeder Projektionspunkt der Stege 41 auf den eingelegten Hohlkörper bei Veränderung der Spaltbreite zwischen dem Hohlkörper und den Stegen 41 ebenfalls verändert, so daß sich bei einer Koronaentladung und gleichzeitigem Öffnen des Werkzeuges 40 zwangsläufig eine flächendeckende Behandlung der äußeren Oberfläche des Hohlkörpers ergibt.

Der Hohlkörper kann dabei als geschlossener Körper ausgebildet sein, wobei dann das ionisierbare Gas oder Gasgemisch bereits während des Blasvorganges bzw. vor dessen Beginn eingebracht wurde, er kann aber auch mit einer verschließbaren Öffnung versehen sein und erst nach dem Einlegen in das Werkzeug 14 mit dem ionisierbaren Gas gefüllt werden.

## Patentansprüche

1. Verfahren zur Erzeugung von Adhäsionskräften an den Oberflächen von aus unpolarem Kunststoff im diskontinuierlichen Blasverfahren hergestellten Hohlkörpern mittels einer Koronaentladung, wobei die Koronaentladung durch zwei mit einem Wechselstrom gespeisten Elektroden erzeugt wird, von denen eine im Innern jedes Hohlkörpers oder in seinem Öffnungsbereich und die andere im Bereich seiner äußeren Oberfläche angeordnet ist, **dadurch gekennzeichnet,** daß zu Beginn, während oder nach dem Blasvorgang als Trägermedium des durch die Elektroden erzeugten Potentials ein jeden Hohlkörper (12) ausfüllendes, leichter als Luft ionisierbares Gas oder Gasgemisch eingebracht und danach mittels elektrischer Zündimpulse durch eine Stoßionisation ioniesiert wird, wobei gleichzeitig im Zusammenwirken mit einem den oder die Hohlkörper (12) zumindest teilweise umgreifenden Werkzeug (1, 40) als Masseelektrode die Koronaentladung erfolgt.

2. Verfahren nach Anspruch 1, dadurch gekennzeichnet, daß das Gas (4) oder Gasgemisch zum Blasen des Hohlkörpers (12) in einem Kunststoffschlauch unter Druck eingebracht wird, wobei der Kunststoffschlauch in einem Blasformwerkzeug (1) einliegt.

3. Verfahren nach Anspruch 1 oder 2, dadurch gekennzeichnet, daß als ionisierbares Gas Helium verwendet wird.

4. Verfahren nach Anspruch 1, dadurch gekennzeichnet, daß unmittelbar nach dem Blasen eines Hohlkörpers (12) mit Luft diese abgesaugt und das ionisierbare Gas oder Gasgemisch in den Hohlkörper (12) gebracht wird.

5. Verfahren nach Anspruch 1, dadurch gekennzeichnet, daß das Gas (4) oder Gasgemisch nach Beendigung der Adhäsionskrafterzeugung aus dem Hohlkörper (12) gesaugt und anschließend zur Wiederverwendung gereinigt wird.

6. Verfahren nach Anspruch 1 oder 2, dadurch gekennzeichnet, daß ein mit Kalium oder ähnlichen, die Ionisierbarkeit ermöglichenden Mitteln geimpftes Gas oder Gasgemisch verwendet wird.

7. Vorrichtung zur Durchführung des Verfahrens nach Anspruch 1, mit einer im Innern des Hohlkörpers oder dessen Öffnungsbereich angeordneten inneren und einer im Bereich der äußeren Oberfläche des Hohlkörpers angeordneten äußeren Elektrode, dadurch gekennzeichnet, daß die äußere Elektrode als ein den Hohlkörper zumindest teilweise umgreifendes Werkzeug (1, 40) ausgebildet ist, dem ein Hochspannung erzeugender Generator (11) zugeordnet ist.

8. Vorrichtung nach Anspruch 7, dadurch gekennzeichnet, daß die dem Hohlkörper (12) zugewandte Formfläche des Werkzeuges (1,40) mit einer elektrisch ionisierenden Keramikbeschichtung (37), beispielsweise aus Aluminiumoxyd versehen ist.

9. Vorrichtung nach Anspruch 7, dadurch gekennzeichnet, daß ein in den Hohlkörper (12) ragendes Leitrohr (9) einer Blasdüse als Zündelektrode ausgebildet ist.

10. Vorrichtung nach Anspruch 7, dadurch gekennzeichnet, daß mindestens zwei Blasformwerkzeuge (1) jeweils einen gemeinsamen Luftspeicher (20), Gasspeicher (21) sowie eine Reinigungseinrichtung zur Gasreinigung aufweisen, wobei der Luftund Gasspeicher (20,21) zur wechselweisen Beschickung eines in ein Blasformwerkzeug (1) geführten Kunststoffschlauches bzw. des Hohlkörpers (12) mit einer Saug-/Druckpumpe versehen ist.

11. Vorrichtung nach Anspruch 10, dadurch gekennzeichnet, daß die Beschickung der Blasformwerkzeuge (1) mit Luft bzw. Gas durch Ventile (22,23,24,25,26,27) steuerbar ist.

12. Vorrichtung nach Anspruch 7, dadurch gekennzeichnet, daß das Werkzeug (40) auf seiner dem Hohlkörper (12) zugewandten Formfläche erhabene Stege (41) aufweist.

13. Vorrichtung nach Anspruch 12, dadurch gekennzeichnet, daß die Stege (41), bezogen auf den Querschnitt des Hohlkörpers (12), konvex oder konkav gewölbt sind.

14. Vorrichtung nach Anspruch 7, dadurch gekennzeichnet, daß das Werkzeug (40) bzw. das Blasformwerkzeug (1) aus mindestens zwei, parallel zur Längsachse des Hohlkörpers (12) angeordneten und gegeneinander bewegbaren Teilen besteht, wobei die zwischen den Teilen gebildeten Nahtstellen durch federbelastete Massebleche (39) abgedeckt sind.

15. Vorrichtung nach Anspruch 14, dadurch gekennzeichnet, daß das Werkzeug (40) bzw. das Blasformwerkzeug (1) aus einer Vielzahl von nebeneinanderliegenden Segmenten besteht.

16. Vorrichtung nach einem oder mehreren der vorhergehenden Ansprüche 7 bis 15, dadurch gekennzeichnet, daß die Ventile (22,23,24,25,26,27) sowie die Luft- bzw. Gasleitungen aus einem elektrisch nicht leitenden Material gebildet sind.

17. Vorrichtung nach Anspruch 9, dadurch gekennzeichnet, daß in dem Leitrohr (9) ein radioaktiver Feststoffkörper (14) angeordnet ist.

18. Vorrichtung nach Anspruch 9, dadurch gekennzeichnet, daß das Leitrohr (9) mit Entladungsspitzen (13) versehen ist.

19. Vorrichtung nach Anspruch 9, dadurch gekennzeichnet, daß das Leitrohr (9) mit einem doppelwandigen Isolierrohr versehen ist, das im Innenraum mit einem ionisierbaren Edelgas gefüllt ist.

**Claims**

1. A method of producing adhesion forces at the surfaces of hollow bodies manufactured from nonpolar plastics material in a discontinuous blowing process by means of a corona discharge, wherein the corona discharge is produced by two electrodes which are supplied with an alternating current and of which one is arranged in the interior of each hollow body or in the region of the opening thereof and the other is arranged in the region of its outside surface, characterised in that at the beginning, during or after the blowing operation, a gas or gas mix which fills each hollow body (12) and which is more easily ionisable than air is introduced as a carrier medium for the potential produced by the electrodes and thereafter ionised by means of electrical ignition pulses by collision ionisation, wherein corona discharge is produced at the same time in conjunction with a tool (1, 40) as an earth electrode, which at least partially embraces the hollow body or bodies (12).

2. A method according to claim 1 characterised in that the gas (4) or gas mix is introduced for blowing the hollow body (12) into a plastics tube under pressure, the plastics tube being enclosed in a blow moulding mould (1).

3. A method according to claim 1 or claim 2 characterised in that helium is used as the ionisable gas.

4. A method according to claim 1 characterised in that directly after blowing of the hollow body (12) with air the air is sucked away and the ionisable gas or gas mix is introduced into the hollow body (12).

5. A method according to claim 1 characterised in that the gas (4) or gas mix, after termination of the operation of producing the adhesion forces, is sucked out of the hollow body (12) and then cleaned for re-use thereof.

6. A method according to claim 1 or claim 2 characterised by using a gas or gas mix injected with potassium or similar means permitting ionisability thereof.

7. Apparatus for carrying out the method according to claim 1 comprising an inner electrode arranged in the interior of the hollow body or the region of the opening thereof and an outer electrode arranged in the region of the outside surface of the hollow body characterised in that the outer electrode is in the form of a tool (1, 40) which at least partially embraces the hollow body and with which there is associated a generator (11) for generating a high voltage.

8. Apparatus according to claim 7 caracterised in that the mould surface of the tool (1, 40) which is towards the hollow body (12) is provided with an electrically ionising ceramic coating (37), for example of aluminium oxide.

9. Apparatus according to claim 7 characterised in that a conduit tube (9) of a blowing nozzle, which tube projects into the hollow body (12), is in the form of an ignition electrode.

10. Apparatus according to claim 7 characterised in that at least two blow moulding tools (1) respectively have a common air storage means (20), gas storage means (21) and a cleaning means for gas cleaning purposes, wherein the air and gas storage means (20, 21) is provided with a suction/pressure pump for alternately charging a plastics tube introduced into a blow moulding tool (1) or the hollow body (12).

11. Apparatus according to claim 10 characterised in that charging of the blow moulding tools (1) with air or gas is controllable by valves (22, 23, 24, 25, 26, 27).

12. Apparatus according to claim 7 characterised in that on its mould surface towards the hollow body (12) the tool (40) has raised bar portions (41).

13. Apparatus according to claim 12 characterised in that the bar portions (41) are of convexly or concavely curved configuration with respect to the cross-section of the hollow body (12).

14. Apparatus according to claim 7 characterised in that the tool (40) or the blow moulding tool (1) comprises at least two portions which are arranged parallel to the longitudinal axis of the hollow body (12) and which are movable relative to each other, wherein the seam locations formed between the portions are covered over by spring-loaded earth plates (39).

15. Apparatus according to claim 14 characterised in that the tool (40) or the blow moulding tool (1) comprises a plurality of mutually juxtaposed segments.

16. Apparatus according to one or more of preceding claims 7 to 15 characterised in that the valves (22, 23, 24, 25, 26, 27) and the air or gas conduits are formed from an electrically non-conducting material.

17. Apparatus according to claim 9 characterised in that a radioactive solid body (14) is arranged in the conduit tube (9).

18. Apparatus according to claim 9 characterised in that the conduit tube (9) is provided with discharge points (13).

19. Apparatus according to claim 9 characterised in that the conduit tube (9) is provided with a double-wall insulating tube which is filled in its interior with an ionisable inert gas.

**Revendications**

1. Procédé pour la production, par une décharge à effet corona, de forces d'adhérence sur les surfaces de corps creux réalisés en matière plastique non polaire par soufflage discontinu, la décharge à effet corona étant produite par deux électrodes alimentées en courant alternatif, dont l'une est disposée à l'intérieur de chaque corps creux ou dans sa région d'ouverture, et l'autre dans la région de sa surface extérieure, caractérisé en ce qu'au début de l'opération de soufflage, ou bien pendant ou après cette opération, un gaz ou mélange gazeux ionisable plus léger que l'air, remplissant chaque corps creux (12), est introduit comme fluide porteur du potentiel produit par les électrodes, puis est ionisé par une ionisation par impact au moyen d'impulsions électriques d'amorçage, la décharge à effet corona ayant lieu simultanément en coopération avec un outil (1, 40) enveloppant au moins partiellement le ou les corps creux (12), outil qui sert d'électrode de masse.

2. Procédé selon la revendication 1, caractérisé en ce que le gaz (4) ou mélange gazeux est introduit sous pression dans un boudin de matière plastique en vue de réaliser par soufflage le corps creux (12), le boudin de matière plastique se trouvant dans un outil de soufflage (1).

3. Procédé selon la revendication 1 ou 2, caractérisé en ce qu'on utilise comme gaz ionisable de l'hélium.

4. Procédé selon la revendication 1, caractérisé en ce que, juste après le soufflage d'un corps creux (12) à l'air, l'air est évacué par aspiration, et le gaz ou mélange gazeux ionisable est introduit dans le corps creux (12).

5. Procédé selon la revendication 1, caractérisé en ce qu'une fois terminée la production des forces d'adhérence, le gaz (4) ou mélange gazeux est évacué du corps creux par aspiration, puis épuré en vue d'être réutilisé.

6. Procédé selon la revendication 1 ou 2, caractérisé en ce qu'on utilise un gaz ou mélange gazeux dopé de potassium ou autres moyens similaires permettant l'ionisation.

7. Dispositif pour la mise en oeuvre du procedé selon la revendication 1, avec une électrode intérieure disposée à l'intérieur du corps creux ou dans sa région d'ouverture, et une électrode extérieure disposée dans la région de la surface extérieure du corps creux, caractérisé en ce que l'électrode extérieure est réalisée sous la forme d'un outil (1, 40) enveloppant au moins partiellement le corps creux, et auquel est associé un generateur (11) produisant une haute tension.

8. Dispositif selon la revendication V, caractérisé en ce que la face de formage de l'outil (1, 40), tournée vers le corps creux (12), est munie d'une enduction en matériau céramique (37) électriquement ionisante, par exemple en alumine.

9. Dispositif selon la revendication 7, caractérisé en ce qu'un tube conducteur (9) d'une buse de soufflage, tube qui pénètre à l'intérieur du corps creux (12), est prevu comme électrode d'amorçage.

10. Dispositif selon la revendication 7, caractérisé en ce qu'au moins deux outils de soufflage (1) presentent à chaque fois en commun un réservoir d'air (20), un réservoir de gaz (21) et un dispositif épurateur pour l'épuration du gaz, l'ensemble constitué du réservoir d'air (20) et du réservoir de gaz (21) étant pourvu d'une pompe aspirante et refoulante pour l'alimentation alternative d'un boudin de matière plastique amené dans un outil de soufflage (1), ou selon le cas du corps creux (12).

11. Dispositif selon la revendication 10, caractérisé en ce que l'alimentation en air ou selon le cas en gaz des outils de soufflage (1) peut être commandée par des valves (22, 23, 24, 25, 26, 27).

12. Dispositif selon la revendication 7, caractérisé en ce que l'outil (40) presente des nervures en relief (41) sur sa face de formage tournée vers le corps creux (12).

13. Dispositif selon la revendication 12, caractérisé en ce que les nervures (41) presentent une courbure convexe ou concave, par rapport à la section du corps creux (12).

14. Dispositif selon la revendication 7, caractérisé en ce que l'outil (40) ou selon le cas l'outil de soufflage (1) est constitué d'au moins deux parties disposées parallèlement à l'axe longitudinal du corps creux (12) et mobiles l'une par rapport à l'autre, les points de jonction formés entre ces parties étant recouverts par des tôles massives (39) sollicitées élastiquement.

15. Dispositif selon la revendication 14, caractérisé en ce que l'outil (40) ou selon le cas l'outil de soufflage (1) est constitué d'une multiplicité de segments juxtaposés.

16. Dispositif selon une ou plusieurs des revendications precedentes 7 à 15, caractérisé en ce que les valves (22, 23, 24, 25, 26, 27), ainsi que les conduites d'air ou selon le cas de gaz, sont réalisées en un matériau electriquement non conducteur.

17. Dispositif selon la revendication 9, caractérisé en ce que, un corps solide radioactif (14) est disposé dans le tube conducteur (9).

18. Dispositif selon la revendication 9, caractérisé en ce que le tube conducteur (9) est muni de pointes de décharge (13).

19. Dispositif selon la revendication 9, caractérisé en ce que le tube conducteur (9) est pourvu d'un tube isolant à double paroi, dont l'espace intérieur est rempli d'un gaz rare ionisable.

Fig. 1

*Fig. 2*

*Fig. 3*

EP 0 250 798 B1